# EUROPÄISCHE PATENTSCHRIFT

(11) **EP 1 623 538 B1**
(45) Veröffentlichungstag und Bekanntmachung des Hinweises auf die Patenterteilung: **12.05.2010**
(21) Anmeldenummer: 04728572.1
(22) Anmeldetag: 21.04.2004
(51) Int. Cl.: H04W 72/12

(54) **VERFAHREN ZUR DATENÜBERTRAGUNG VON EINER SENDENDEN AN EINE EMPFANGENDE STATION ÜBER EINE FUNKVERBINDUNG SOWIE EMPFANGENDE STATION UND SENDENDE STATION**
METHOD FOR TRANSMITTING DATA FROM A TRANSMITTING STATION TO A RECEIVING STATION VIA A RADIO LINK, AND CORRESPONDING RECEIVING STATION AND TRANSMITTING STATION
PROCEDE POUR TRANSMETTRE DES DONNEES D'UNE STATION D'EMISSION A UNE STATION DE RECEPTION PAR UNE LIAISON RADIO ET STATION DE RECEPTION ET STATION D'EMISSION

(30) Priorität: 12.05.2003 DE 10321205
(43) Veröffentlichungstag der Anmeldung: 08.02.2006
(73) Patentinhaber: Nokia Siemens Networks GmbH & Co. KG, 81541 München (DE)
(72) Erfinder: CHARPENTIER, Frederic, 10115 Berlin (DE); BREUER, Volker, 16727 Bötzow (DE)
(86) Internationale Anmeldenummer: PCT/EP2004/050578
(87) Internationale Veröffentlichungsnummer: WO 2004/100463

(56) Entgegenhaltungen:
- EP-A- 1 251 663
- US-A1- 2003 026 204
- LUCENT: "Scheduled and Autonomous Mode Operation for the Enhanced Uplink" 3GPP TSG RAN WG1-31, TDOC R1-03-0284, [Online] 17. Februar 2003 (2003-02-17), Seite 1-7, XP002298746 Gefunden im Internet: URL:http://www.3gpp.org/ftp/tsg_ran/WG1_RL 1/TSGR1_31/Docs/Zips/R1-030284.zip> [gefunden am 2004-09-29]
- LUCENT: "Timing Considerations for EUDCH" 3GPP TSG RAN WG1-31, TDOC R1-03-0283, [Online] 17. Februar 2003 (2003-02-17), Seite 1-5, XP002298747 Gefunden im Internet: URL:http://www.3gpp.org/ftp/tsg_ran/WG1_RL 1/TSGR1_31/Docs/Zips/R1-030283.zip> [gefunden am 2004-09-29]
- SIEMENS: "EUDTCH Scheduling Considerations and Text Proposal for TR 25.896" 3GPP TSG RAN WG1-31, TDOC R1-030235, [Online] 18. August 2002 (2002-08-18), Seite 1-4, XP002298748 Gefunden im Internet: URL:http://www.3gpp.org/ftp/tsg_ran/WG1_RL 1/TSGR1_31/Docs/Zips/R1-030235.zip> [gefunden am 2004-09-29]
- NOKIA: "Node B Controlled Scheduling by Fast TFCS Restriction Control" 3GPP TSG RAN WG1-31, TDOC R1-03-0181, [Online] 18. Februar 2003 (2003-02-18), Seite 1-5, XP002298749 Gefunden im Internet: URL:http://www.3gpp.org/ftp/tsg_ran/WG1_RL 1/TSGR1_31/Docs/Zips/R1-030181.zip> [gefunden am 2004-09-29]

## Beschreibung

Die Erfindung betrifft ein Verfahren zur Datenübertragung von einer sendenden an eine empfangende Station über eine Funkverbindung sowie eine entsprechende empfangende Station und eine entsprechende sendende Station.

In Funkkommunikationssystem, die zur Teilnehmerseparierung ein CDMA-Verfahren (CDMA: Code Division Multiple Access) verwenden, ist die Übertragungskapazität in Aufwärtsrichtung (engl.: uplink oder reverse link), d. h. von einer Teilnehmerstation zu einer Basisstation, durch das in der Basisstation auftretende Interferenzniveau limitiert. Das Interferenzniveau lässt sich durch einen sogenannten "noise rise" charakterisieren, der definiert ist als das Verhältnis von insgesamt empfangener Leistung zu der Leistung des thermischen Rauschens. Der noise rise wird beeinflusst durch die Anzahl übertragender Teilnehmerstationen, die Empfangsleistung der Signale der Teilnehmerstationen in der Basisstation sowie andere Quellen, die Rauschen erzeugen.

Basisstationen, bei denen eine signifikante Erhöhung des noise rise eintritt, leiden unter Instabilitäten (Zellatmung, engl.: cell breathing), die zu einer Verschlechterung übertragener Dienste und zu einer verringerten Zellabdeckung führen können.

Es ist daher essentiell für den Betrieb eines Funkzugangsnetzes, beispielsweise dem UTRAN (Universal Terrestrial Radio Access Network) in einem Funkkommunikationssystem nach dem UMTS-Standard (UMTS: Universal Mobile Telecommunication System), den noise rise zu kontrollieren, indem entsprechende Beschränkungen für Übertragungen in Aufwärtsrichtung netzseitig, d. h. vom UTRAN, festgelegt werden.

Zwei Aspekte sollten bei einer Kontrolle des noise rise berücksichtigt werden:
- Der Mittelwert des noise rise sollte unter einer oberen Grenze gehalten werden (ein typischer Wert liegt hier bei 6 dB).
- Die Schwankung des noise rise mit der Zeit, d. h. die Varianz einer Noise-Rise-Verteilungsfunktion, sollte so klein wie möglich sein.

Bisher kann das UTRAN zur Kontrolle des Mittelwertes des noise rise die maximale Sendeleistung von Teilnehmerstationen durch entsprechende Signalisierungen festlegen (3GPP [3rd Generation Partnership Program] 25.133v5.6.0, Kapitel 6.5). Diese Signalisierungen werden von einem Funkzugangskontroller (RNC, Radio Ressource Controler) generiert und über Basisstationen an die Teilnehmerstationen gesendet. Der Nachteil dieser Art der Signalisierung liegt in relativ großen Signallaufzeiten, d. h. Signalverzögerungen, die eine genaue Kontrolle des noise rise verhindern.

Zur Kontrolle der Schwankungen des noise rise kann eine schnelle Leistungsregelung (fast power control loop) verwendet werden (3GPP 25.214v5.4.0, Kapitel 5.1.2). Diese ist jedoch ungeeignet, wenn die gesamte in der Basisstation empfangene Leistung nicht konstant ist. Dies tritt beispielsweise auf bei einer Übertragung von Datenpaketen, die nicht kontinuierlich sondern Funkblöcken (engl.: radio bursts) erfolgt, durch neue aktive Teilnehmerstationen oder durch eine Veränderung eines Sollwerts der Empfangsqualität (z. B. SIR [Signal to Interference Ratio]) einer Teilnehmerstation.

Eine weitere Möglichkeit die Schwankung des noise rise zu kontrollieren, besteht in der Möglichkeit, ein DRAC (Dynamic Ressource Allocation Protocol) genanntes Medium-Zugangs-Protokoll zu verwenden (3GPP 25.331v5.4.0, Kapitel 14.8 und EP 1033846 A1). Dieses Protokoll soll die Anzahl gleichzeitig erfolgender Datenübertragungen dadurch statistisch reduzieren, dass für eine Teilnehmerstation der Beginn einer Datenübertragung mittels einer Zufallsfunktion festgelegt wird.

Zur Zeit werden im Rahmen der Standardisierungsvorhaben der 3GPP (3rd Generation Partnership Project) unter dem Begriff "Enhanced Uplink" (3GPP TR25.896v0.3.0) Verfahren diskutiert, die eine Übertragung von Datenpaketen in Aufwärtsrichtung mit erhöhter Datenrate ermöglichen. Der Zugriff auf ein Übertragungsmedium mittels des DRAC Protokolls ist jedoch nicht dafür ausgelegt, hohe Datenraten für eine Datenübertragung in Aufwärtsrichtung zu ermöglichen. Der maximale Datendurchsatz ist auf 512 Kbit/s limitiert (vgl. 3GPP 25.331v5.4.0, Kapitel 10.3.3.20).

Aus dem Dokument "Scheduled and Autonomous Mode Operation for Enhanced Uplink", 3GPP TSG RAN WG1#31, Tdoc R1-03-0284, Seite 1-7, XP-002298746, ist ein Verfahren bekannt, bei dem ein Node B festlegt, welche Teilnehmerstationen in Aufwärtsrichtung übertragen dürfen. Festgelegt werden Startzeit und Dauer der Datenübertragungen der Teilnehmerstationen. Bei der Entscheidung des Node B welche Teilnehmerstationen eine Erlaubnis haben, Daten zu übertragen, und bei der Auswahl einer Datenrate oder einer Sendeleistung für diese Teilnehmerstationen berücksichtigt der Node B beispielsweise folgende Parameter: Speicherstatus jeder Teilnehmerstation, Sendeleistungsbegrenzung jeder Teilnehmerstation, Kanalqualitätsschätzung für jede Teilnehmerstation oder zulässiger noise rise bis zum Erreichen der Rise Over Thermal (RoT) Grenze beim Node B.

Der Erfindung liegt daher die Aufgabe zugrunde, ein Verfahren zur Datenübertragung anzugeben, mit dem eine sendende Station ihre Datenübertragung so steuern kann, dass eine Reduzierung des Interferenzniveaus in einer empfangenden Station erreicht werden kann.

Diese Aufgabe wird mit den Verfahren sowie den Vorrichtungen gemäß den unabhängigen Ansprüchen gelöst.

Vorteilhafte Aus- und Weiterbildungen der Erfindung sind Gegenstand der abhängigen Ansprüche.

Bei dem erfindungsgemäßen Verfahren zur Datenübertragung von einer sendenden an eine empfangende Station über eine Funkverbindung wird in einem ersten Schritt die Funkverbindung zwischen der sendenden und der empfangenden Station aufgebaut und in einem zweiten Schritt beginnt die sendende Station die Datenübertragung erst nach dem Ermitteln des Ablaufs eines für die sendende Station individuellen ersten Zeitintervalls, dessen Dauer von wenigstens einer deterministischen Größe abhängt. Durch den Ablauf eines individuellen ersten Zeitintervalls bis zum Beginn der Datenübertragung, kommt es zu einer statistischen Verteilung von Datenübertragungen mehrerer sendender Stationen. Auf diese Weise ist die Wahrscheinlichkeit einer Häufung gleichzeitiger Datenübertragungen mehrerer sendender Stationen und einem daraus resultierendes hohes Interferenzniveau in der empfangenden Station reduziert. Darüber hinaus ermöglicht die Verwendung wenigstens einer deterministischen Größe zur Festlegung der Dauer des ersten Zeitintervalls eine kontrollierte Einflussnahme auf den Beginn der Datenübertragung und somit auch eine Einflussnahme auf das Interferenzniveau, das sich durch einen noise rise charakterisieren lässt. Eine Verringerung des noise rise bedingt somit eine Verringerung des Interferenzniveaus und umgekehrt.

Eine deterministisch Größe unterscheidet sich von einer zufällig generierten Größe dadurch, dass eine deterministische Größe bereits vor ihrer Messung bzw. Berechnung theoretisch feststeht, d. h. ein wiederholtes Bestimmen einer deterministischen Größe führt bei gleichen Randbedingungen immer zum gleichen Ergebnis. Deterministisch ist somit das Gegenteil von zufällig bzw. stochastisch.

Ist die deterministischen Größe eine Prioritätsklasse der sendenden Station, so hat dies den Vorteil, dass verschiedenen sendenden Stationen in Abhängigkeit von der jeweiligen Prioritätsklasse unterschiedliche erste Zeitintervalle zugewiesen werden können. Einer sendenden Station, die zur Übertragung eines zeitkritischen Dienstes verwendet wird, beispielsweise für einen Notruf, kann so gegenüber einer sendenden Station, die beispielsweise eine einfache Textnachricht versendet, die Datenübertragung bevorzugt ermöglicht werden.

Von Vorteil ist auch, wenn die deterministische Größe wenigstens ein zeitlich veränderlicher, für die sendende Station und/oder die Funkverbindung spezifischer Parameter ist. Der Beginn der Datenübertragung kann so immer an die aktuellen Bedingungen eines Übertragungskanals bzw. die spezifischen Anforderungen der sendenden Station angepasst werden. Besonders bevorzugt hängt das erste Zeitintervall von einer Kombination der Prioritätsklasse und des spezifischen Parameters ab.

Vorzugsweise ist der wenigstens eine zeitlich veränderliche, für die sendende Station spezifische Parameter ein Zustand eines Datenspeichers der zu übertragenden Daten und/oder ein Ladezustand einer die sendende Station versorgenden Energiequelle. Ist der Datenspeicher der sendenden Station fast voll und/oder die Batterie schon fast leer, so kann für die sendende Station ein möglichst kurzes erstes Zeitintervall gewählt werden, um zu verhindern, dass der Datenspeicher überläuft und/oder dass die Datenübertragung nicht abgeschlossen werden kann, weil die Batterie leer ist.

Besonders zweckmäßig ist es, wenn der wenigstens eine zeitlich veränderliche, für die Funkverbindung spezifische Parameter Übertragungseigenschaften eines für die Funkverbindung verwendeten physikalischen Kanals betrifft. Benötigt die sendende Station beispielsweise wegen guter Übertragungseigenschaften eine sehr geringe Sendeleistung für ihre Datenübertragung, so kann für sie ein möglichst kurzes erstes Zeitintervall verwendet werden, da durch ihre Datenübertragung nur eine geringe Erhöhung des Interferenzniveaus resultiert.

Vorteilhafter Weise wird der Ablauf des ersten Zeitintervalls durch den Vergleich eines Werts eines Zählers mit einem Grenzwert bestimmt. Anstelle eines typischen Zählers, der in bestimmten Zeitabständen um einen vorgebbaren Wert erhöht bzw. erniedrigt wird, kann selbstverständlich auch jede andere Vorrichtung verwendet werden, die sich zur Bestimmung eines Zeitintervalls eignet. Beispielsweise kann ein Kondensator aufgeladen werden, und der Vergleich mit dem Grenzwert besteht in diesem Fall in einer Überprüfung des Ladezustandes des Kondensators.

Ein möglichst kurzes erstes Zeitintervall lässt sich beispielsweise dadurch erreichen, dass der oben beschriebene Zähler schneller gezählt wird, oder dass der Grenzwert in Abhängigkeit von einer Zählrichtung des Zählers besonders niedrig bzw. hoch gewählt wird.

Vorteilhafter Weise empfängt die sendende Station von der empfangenden Station einen Wert für eine Mindestzeitdauer für die Datenübertragung.

Zweckmäßig ist, dass die Mindestzeitdauer von der Prioritätsklasse der sendenden Station abhängt.

Vorteilhaft ist, wenn die Datenübertragung bei weiterhin bestehender Funkverbindung erst nach dem Ablauf eines für die sendende Station individuellen Sendezeitintervalls unterbrochen wird, dessen Dauer von der deterministischen Größe abhängt. Um das Interferenzniveau in der empfangenden Station zu reduzieren ist es günstig, zusätzlich zum individuellen ersten Zeitintervall, das dem Beginn der Datenübertragung vorangeht, eine maximale Dauer der Datenübertragung in Abhängigkeit von beispielsweise der Prioritätsklasse festzulegen. Eine weitere Verkürzung der Übertragungsdauer in Abhängigkeit vom zeitlich veränderlichen für die sendende Station spezifischen Parameter kann das Interferenzniveau bzw. den noise rise zusätzlich verringern bzw. Schwankungen reduzieren.

Eine bevorzugte Ausgestaltung der Erfindung besteht darin, dass nach einer Unterbrechung der Datenübertragung die Funkverbindung weiterhin besteht und eine Fortsetzung der Datenübertragung nach Ablauf eines für die sendende Station individuellen zweiten Zeitintervalls beginnt, dessen Dauer von der deterministischen Größe abhängt.

Die erfindungsgemäße sendende Station und die erfindungsgemäße empfangende Station weisen alle Merkmale auf, die zur Durchführung der erfindungsgemäßen Verfahren benötigt werden.

Die Erfindung wird im folgenden anhand von in den Figuren dargestellten Ausführungsbeispielen näher erläutert. Es zeigen:
- Fig. 1: eine schematische Darstellung für eine Datenübertragung zwischen einer sendenden Station und einer empfangenden Station,
- Fig. 2: ein Ablaufdiagramm der Datenübertragung zwischen der sendenden Station und der empfangenden Station gemäß Figur 1,
- Fig. 3: den zeitlichen Ablauf zur Ermittelung des Beginns der Datenübertragung der sendenden Station gemäß Figur 1 und einer weiteren sendenden Station und
- Fig. 4: den zeitlichen Ablauf der Datenübertragung, des Beendens der Datenübertragung und des erneuten Beginns einer Datenübertragung der sendenden Station gemäß Figur 1.

Gleiche Bezugszeichen in den Figuren bezeichnen gleiche Gegenstände.

Eine sendende Station ist jede Station, die Signale senden kann. Im nachfolgenden wird als sendende Station eine Teilnehmerstation betrachtet. Eine Teilnehmerstation ist beispielsweise ein Mobiltelefon oder auch eine ortsbewegliche Vorrichtung zur Übertragung von Bild- und/oder Tondaten, zum Fax-, Short Message Service SMS- und Email-Versand und zum Internet-Zugang. Es handelt sich mithin um eine allgemeine Sende- und/oder Empfangseinheit eines Funkkommunikationssystems, insbesondere auch um eine Basisstation.

Als empfangende Station wird im nachfolgenden eine Basisstation betrachtet, ohne jedoch darauf beschränkt zu sein.

Selbstverständlich kann eine empfangende Station auch eine Mobilstation oder eine beliebige andere Station mit einer Empfangseinrichtung zum Empfang von über eine Funkverbindung übertragenen Signalen sein.

Die Erfindung kann vorteilhaft in beliebigen Funkkommunikationssystemen verwendet werden. Unter Funkkommunikationssystemen sind beliebige Systeme zu verstehen, in denen eine Datenübertragung zwischen Stationen über eine Funkschnittstelle erfolgt. Die Datenübertragung kann sowohl bidirektional als auch unidirektional erfolgen. Funkkommunikationssysteme sind insbesondere beliebige Mobilfunksysteme beispielsweise nach dem GSM-(Global System for Mobile Communication) oder dem UMTS-(Universal Mobile Telecommunication System) Standard. Auch Ad-hoc Netze und zukünftige Mobilfunksysteme beispielsweise der vierten Generation sollen unter Funkkommunikationssystemen verstanden werden.

Im folgenden wird die Erfindung am Beispiel eines Mobilfunksystems nach dem UMTS-Standard beschrieben, ohne jedoch darauf beschränkt zu sein.

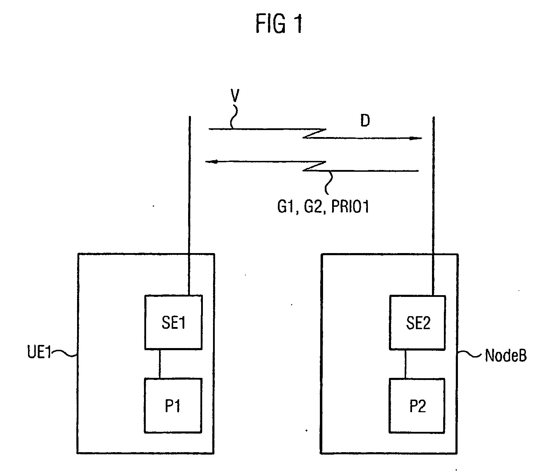

In Figur 1 ist schematisch eine Datenübertragung D von einer Teilnehmerstation UE1 an eine Basisstation NodeB über eine Funkverbindung V dargestellt. Die Teilnehmerstation UE1 und die Basisstation NodeB verfügen jeweils über eine Sende- und Empfangseinheit SE1, SE2 und einen Prozessor P1, P2 zur Steuerung der jeweiligen Sende- und Empfangseinheit SE1, SE2 bzw. einer jeweiligen Datenübertragung. Bei einem Aufbau der Funkverbindung V, jedoch vor dem Beginn einer Datenübertragung D an die Basisstation NodeB, überträgt die Basisstation NodeB, beispielsweise über einen Rundsendekanal, einen ersten Grenzwert G1, einen zweiten Grenzwert G2 und eine Prioritätsklasse PRIO1 der Teilnehmerstation UE1 an die Teilnehmerstation UE1. Alternativ können erster und zweiter Grenzwert G1, G2 auch im vornherein festgelegt und permanent in der Teilnehmerstation UE1 gespeichert sein. In diesem Fall wird an die Teilnehmerstation UE1 nur die Prioritätsklasse PRIO1 übertragen.

Der Beginn der Datenübertragung D der Teilnehmerstation UE1 wird von der Teilnehmerstation UE1 mittels ihres Prozessors P1 bestimmt. Auch die Basisstation NodeB kann selbstverständlich den Beginn der Datenübertragung D mittels ihres Prozessors P2 ermitteln und eine entsprechende Anweisung zur Datenübertragung D an die Teilnehmerstation UE1 übertragen.

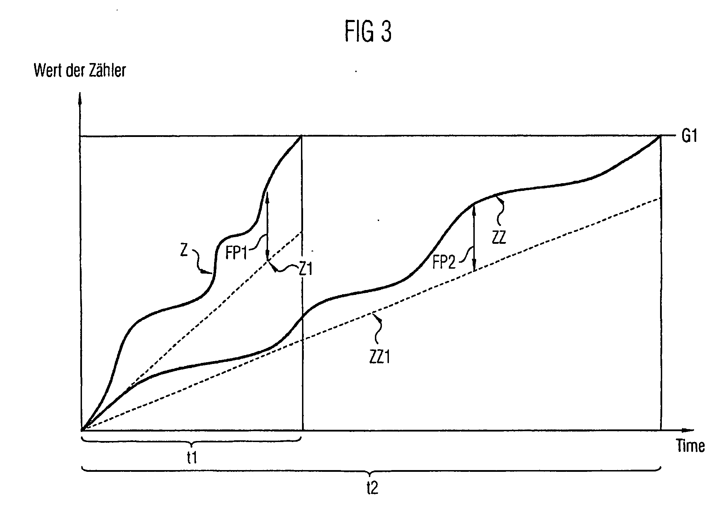

Die Bestimmung des Beginns der Datenübertragung D führt dazu, dass zwischen dem Aufbau der Funkverbindung V und dem Beginn der Datenübertragung D ein erstes Zeitintervall t1 verstreicht, das individuell für die Teilnehmerstation UE1 ist (siehe dazu auch Figur 3). Das erste Zeitintervall t1 hängt ausschließlich von einer deterministischen Größe ab, d. h. zur Ermittelung der Dauer des ersten Zeitintervalls t1 werden, im Gegensatz zu dem aus dem DRAC Protokoll bekannten Zugriffsverfahren, keine Zufallswerte verwendet.

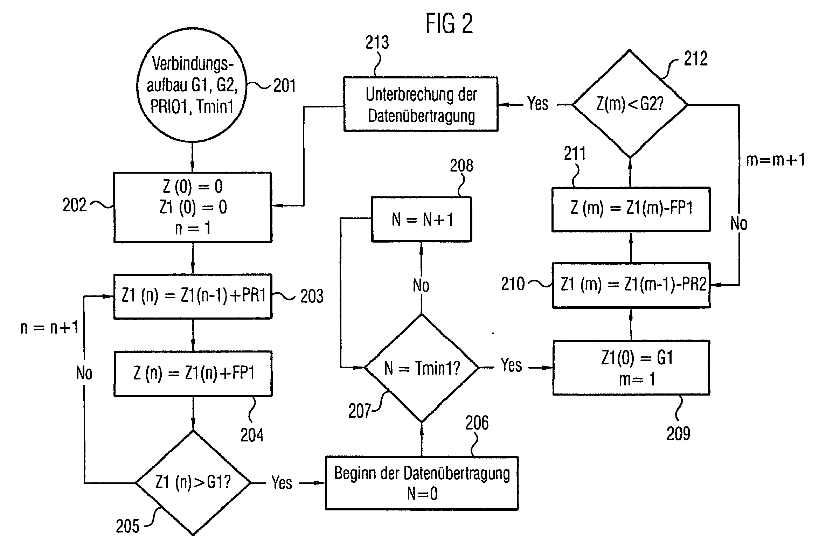

Die Dauer des ersten Zeitintervalls t1 hängt in diesem Ausführungsbeispiel von der Prioritätsklasse PRIO1 der Teilnehmerstation UE1 und von wenigstens einem zeitlich veränderlichen, für die Teilnehmerstation UE1 und/oder die Funkverbindung V spezifischen Parameter FP1 sowie dem ersten Grenzwert G1 ab (siehe dazu auch die Beschreibung zu Figuren 2 und 3).

Der spezifischen Parameter FP1 ist z. B. ein Zustand eines Datenspeichers der Teilnehmerstation UE1, d. h. beispielsweise ein Auslastungsgrad des Datenspeichers, ein Ladezustand der Energiequelle, beispielsweise einer vorzugsweise wieder aufladbaren Batterie, oder auch eine Übertragungseigenschaft eines für die Datenübertragung D verwendeten physikalischen Kanals, beispielsweise eine benötigte Sendeleistung der Teilnehmerstation UE1.

Selbstverständlich kann die deterministische Größe von einer beliebigen Kombination spezifischer Parameter abhängen.

In Figur 2 ist der logische Ablauf vom Aufbau der Funkverbindung V bis zum Beginn der Datenübertragung D der Teilnehmerstation UE1, die Datenübertragung D, sowie eine Unterbrechung der Datenübertragung D schematisch dargestellt.

In Kasten 201 erfolgt der Aufbau der Funkverbindung V und die Übertragung des ersten und zweiten Grenzwertes G1, G2, der Prioritätsklasse PRIO1 sowie einer Mindestzeitdauer Tmin1 der Datenübertragung D von der Basisstation NodeB an die Teilnehmerstation UE1. Anschließend werden in Kasten 202 ein Gesamtzähler Z und ein Teilzähler Z1 auf einen Startwert, beispielsweise auf Null, gesetzt. Eine Iterationsvariable n wird auf den Wert 1 gesetzt. In Kasten 203 wird der Teilzähler um einen Wert PR1 erhöht, der von der Prioritätsklasse PRIO1 abhängt. Eine hohe Prioritätsklasse bedingt einen größeren Wert PR1 als eine niedrige Prioritätsklasse und ergibt daher ein kürzeres erstes Zeitintervall t1 als die niedrige Prioritätsklasse. Das erste Zeitintervall beginnt mit Kasten 201 und endet beim Erreichen von Kasten 206.

Den Wert PR1 entnimmt die Teilnehmerstation UE1 beispielsweise anhand der empfangenen Prioritätsklasse PRIO1 aus einer Tabelle. Die Tabelle sowie Aktualisierungen der Tabelle erhält die Teilnehmerstation UE1 beispielsweise über einen Rundsendekanal. Selbstverständlich kann der Wert PR1 auch über eine individuelle Verbindung von der Basisstation NodeB an die Teilnehmerstation UE1 übertragen werden.

In Kasten 204 wird der Wert des Gesamtzählers Z aus der Summe von Teilzähler Z1 und spezifischem Parameter FP1 gebildet. Nach einem Vergleich des Wertes des Gesamtzählers Z mit dem ersten Grenzwert G1, erfolgt, falls Z < G1 ist, eine erneute Bestimmung von Teilzähler Z1 und Gesamtzähler Z durch ein Durchlaufen der Kästen 203 und 204. Falls Z > G1 ist, wird die Datenübertragung D in Kasten 206 begonnen.

Mit dem Beginn der Datenübertragung D wird ein weiterer Zähler N auf Null gesetzt. Dieser Zähler dient dazu sicherzustellen, dass die Datenübertragung D mindesten die Mindestzeitdauer Tmin1 hat. Hierzu wird der weitere Zähler N in Kasten 207 mit der Mindestzeitdauer Tmin1 verglichen und in Kasten 208 solange um 1 erhöht, bis die Bedingung N = Tmin1 erfüllt ist.

Ist der weitere Zähler N gleich der Mindestzeitdauer Tminl, wird in Kasten 209 der Teilzähler Z1 auf den Grenzwert G1 als startwert gesetzt und eine weitere Iterationsvariable m auf den Wert 1 gesetzt. In Kasten 210 wird der Teilzähler Z1 um einen aufgrund der Prioritätsklasse PRIO1 festgelegten Wert PR2 erniedrigt. Dieser Wert PR2 kann in gleicher Weise wie der in Kasten 203 verwendete Wert PR1 anhand einer Tabelle ermittelt oder von der Basisstation NodeB übertragen werden.

In Kasten 211 wird der Wert des Gesamtzählers Z durch Abziehen des spezifischen Parameters FP1 vom Teilzähler Z1 berechnet und in Kasten 212 mit dem zweiten Grenzwert G2 verglichen. Ist der Wert des Gesamtzählers Z > G2, so werden die Zählerstände in Kästen 210 und 211 erneut berechnet. Ist Z < G2, so wird die Datenübertragung D in Kasten 213 unterbrochen und falls weitere Daten zur Übertragung anstehen bzw. die Funkverbindung nicht netzseitig oder teilnehmerseitig beendet wird, beginnt das oben beschriebene Verfahren erneut in Kasten 202.

Selbstverständlich können für ein erneutes Durchlaufen des Verfahrens oder sogar während eines Durchlaufens des Verfahrens auch neue erste und zweite Grenzwerte, eine neue Prioritätsklasse und eine neue Mindestzeitdauer der Datenübertragung von der Basisstation NodeB an die Teilnehmerstation UE1 übertragen werden.

Die anhand der Prioritätsklasse PRIO1 festgelegten Werte PR1 und PR2, die zur Berechnung des Teilzählers Z1 in den Kästen 203 und 210 verwendet werden, können selbstverständlich sowohl gleich als auch unterschiedlich sein. Auf diese Weise können für das erste Zeitintervall t1 und für ein Sendezeitintervall t3, das vom Beginn der Datenübertragung in Kasten 206 bis zur Unterbrechung der Datenübertragung in Kasten 213 dauert, unterschiedliche maximale Zeitdauern festgelegt werden. Weiterhin können unterschiedliche spezifische Parameter FP1 in Kästen 204 und 211 verwendet bzw. kombiniert werden. Vorzugsweise werden jedoch die gleichen spezifischen Parameter FP1 in den Kästen 204 und 211 verwendet bzw. kombiniert.

Äquivalent zu der zuvor beschriebenen Ausführungsform kann der Beginn der Datenübertragung selbstverständlich auch durch ein von einem vorgebbaren Startwert ausgehendes Erniedrigen des Teilzählers Z1 und des Gesamtzählers Z und ein Unterschreiten eines Grenzwertes bestimmt werden. Entsprechend können Teilzähler Z1 und Gesamtzähler Z zum Beenden der Da tenübertragung erhöht werden, bis ein entsprechender Grenzwert überschritten wird. Ebenfalls können für den Beginn und das Beenden der Datenübertragung unterschiedliche Gesamt- und Teilzähler verwendet werden.

Die Basisstation NodeB gibt mindestens einen der Grenzwerte G1, G2 explizit an, während der andere Grenzwert G1, G2 natürlich auch relativ zu dem explizit angegebenen Grenzwert G1, G2 angegeben werden kann.

Die Wahl der Grenzwerte G1, G2 bzw. der Differenz der Grenzwerte G1, G2 hängt beispielsweise von einem noise rise der Basisstation NodeB ab, der durch das Verhältnis von insgesamt empfangener Leistung zu der Leistung des thermischen Rauschens definiert ist. Dadurch, dass Erfindung ermöglicht, eine Wahrscheinlichkeit für eine gleichzeitige Datenübertragung von verschiedenen Teilnehmerstationen durch eine statistische Verteilung des jeweiligen Beginns der Datenübertragung und der jeweiligen Übertragungsdauer zu reduzieren, kann der noise rise der Basisstation NodeB durch eine von einem gemessenen noise rise ausgehenden Anpassung der Grenzwerte G1, G2 gesteuert und somit optimiert werden.

Ist der noise rise beispielsweise größer als ein gewünschter Sollwert, z. b. 6 dB, so kann der erste Grenzwert G1 erhöht werden und/oder die Differenz zum zweiten Grenzwert G2 verringert werden.

Das erfindungsgemäße Verfahren benötigt weniger Signalisierungsaufwand als das eingangs erwähnte DRAC Protokoll, da alle Teilnehmerstationen den ersten und zweiten Grenzwert G1, G2 gemeinsam verwenden und hat geringere Signallaufzeiten, da die Grenzwerte G1, G2 direkt von der Basisstation NodeB kon trolliert werden, während die Signalisierung des DRAC Protokolls von einem Funkzugangskontroller (RNC) kontrolliert wird, der seine Signale vor einer Übertragung an eine Teilnehmerstation zunächst an eine Basisstation zur Weiterleitung senden muss. Weiterhin werden erfindungsgemäß auch teilnehmerspezifische Größen verwendet, so dass für den Beginn und das Beenden einer Datenübertragung die individuellen Bedürfnisse der Teilnehmerstation berücksichtigt werden können. Eine Teilnehmerstation mit guten Übertragungsbedingungen, beispielsweise eine Teilnehmerstation, die wenig Sendeleistung benötigt, kann bevorzugt behandelt werden, d. h. schneller als Teilnehmerstation mit schlechten Übertragungsbedingungen mit ihrer Datenübertragung beginnen und/oder länger Daten übertragen. In gleicher Weise kann eine Teilnehmerstation mit einem fast vollen Datenspeicher bevorzugt werden, um so zu verhindern, dass diese Teilnehmerstation einen Datenfluss von höheren Schichten unterbrechen muss, wenn der Datenspeicher voll ist.

Ein weiterer Vorteil des erfindungsgemäßen Verfahrens liegt darin, dass für jede Teilnehmerstation durch die Verwendung einer Prioritätsklasse eine maximale Dauer bis zu einem Beginn einer Datenübertragung ebenso festgelegt werden kann wie eine maximale Dauer der Datenübertragung.

In Figur 3 sind schematisch der Verlauf des Teilzähler Z1 und des Gesamtzählers Z der Teilnehmerstation UE1 sowie der erste Grenzwert G1 dargestellt. Für eine weitere Teilnehmerstation ist ebenfalls der Verlauf eines entsprechenden weiteren Teilzählers ZZ1 und eines entsprechenden weiteren Gesamtzählers ZZ dargestellt. Die Werte der Teilzähler Z1, ZZ1 nehmen linear mit der Zeit zu und gewährleisten eine Maximaldauer bis zum Beginn der jeweiligen Datenübertragung. Aus der größeren Steigung des Teilzählers Z1 im Vergleich mit dem weiteren Teilzähler ZZ1, kann abgelesen werden, dass die Teilnehmerstation UE1 eine höhere Prioritätsklasse PRIO1 hat als die weitere Teilnehmerstation.

Der jeweilige Gesamtzählerwert Z, ZZ ergibt sich durch Addition des jeweiligen Teilzählers Z1, ZZ1 und des jeweiligen spezifischen Parameters FP1, FP2. Die Teilnehmerstation UE1 beginnt ihre Datenübertragung D bereits nach dem ersten Zeitintervall t1 während die weitere Teilnehmerstation erst nach einem längeren weiteren Zeitintervall t2 mit ihrer Datenübertragung beginnt. In der Praxis liegen typische maximale Zeitdauern des ersten und des weiteren Zeitintervalls t1, t2 bei einigen 10 Millisekunden.

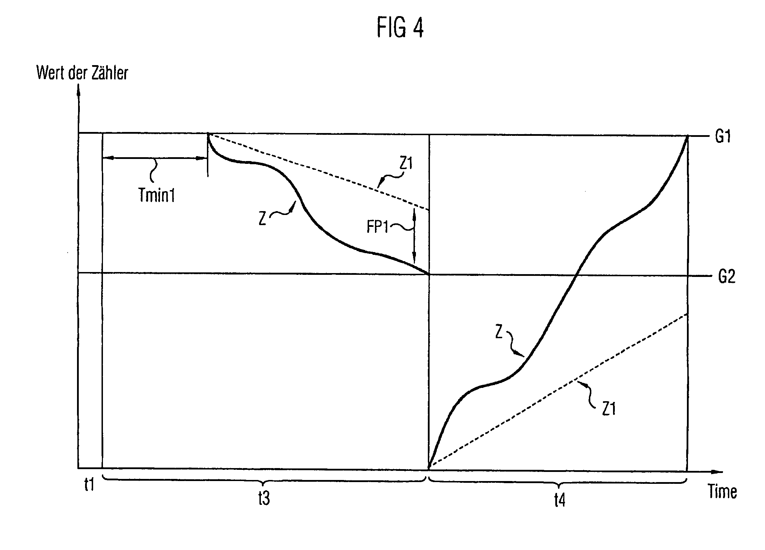

In Figur 4 ist schematisch der Verlauf der Datenübertragung D der Teilnehmerstation UE1 sowie eine Unterbrechung der Datenübertragung D und ein erneutes Bestimmen der Zähler Z, Z1 nach Unterbrechung der Datenübertragung D dargestellt. Wie aus Figur 3 ersichtlich, beginnt die Teilnehmerstation UE1 nach Ablauf des ersten Zeitintervalls t1 ihre Datenübertragung D. Die Datenübertragung D dauert mindestens die Mindestzeitdauer Tmin1. Erst nach Ablauf der Mindestzeitdauer Tmin1 werden Teilzähler Z1 und Gesamtzähler Z wieder in Abhängigkeit von der Prioritätsklasse PRIO1 und dem spezifischen Parameter FP1 erniedrigt, bis der zweite Grenzwert G2 erreicht bzw. unterschritten wird. Die Datenübertragung D dauert insgesamt das Sendezeitintervall t3. Nach Unterbrechung der Datenübertragung D werden bei weiterhin bestehender Funkverbindung V erneut der Teilzähler Z1 und der Gesamtzähler Z erhöht, bis nach dem Verstreichen eines zweiten Zeitintervalls t4 eine Fortsetzung der Datenübertragung erfolgt.

Die Erfindung lässt sich selbstverständlich auch dann anwenden, wenn die Teilnehmerstation UE1 eine Datenübertragung zu mehreren Basisstationen durchführt. Dies erfolgt beispielsweise bei einem Zellwechsel im sogenannten Soft-Handover.

Im Soft-Handover empfängt die Teilnehmerstation UE1 von mehreren Basisstationen jeweils einen ersten und zweiten Grenzwert und/oder eine Prioritätsklasse und/oder eine Mindestzeitdauer für die Datenübertragung. Die Teilnehmerstation verwendet nun beispielsweise die Werte, die sie von der Basisstation mit dem größten noise rise empfangen hat. Selbstverständlich kann die Teilnehmerstation auch ein gegebenenfalls gewichtetes Mittel für die Grenzwerte und/oder die Prioritätsklasse und/oder die Mindestzeitdauer aus allen empfangenen Werten bilden. In gleicher Weise können für den spezifischen Parameter die Übertragungseigenschaften eines physikalischen Kanals oder ein entsprechender über alle physikalischen Kanäle gebildeter Mittelwert verwendet werden.

## Patentansprüche

1. Verfahren zur Datenübertragung (D) von einer sendenden (UE1) an eine empfangende Station (NodeB) über eine Funkverbindung (V), bei dem
- in einem ersten Schritt die Funkverbindung (V) zwischen der sendenden (UE1) und der empfangenden Station (NodeB) aufgebaut wird,
- und in einem zweiten Schritt die sendende Station (UE1) die Datenübertragung (D) erst beginnt, nachdem die sendende Station (UE1) den Ablauf eines für die sendende Station (UE1) individuellen ersten Zeitintervalls (t1) ermittelt hat, dessen Dauer von wenigstens einer deterministischen Größe abhängt.

2. Verfahren nach Anspruch 1, bei dem
die deterministische Größe eine Prioritätsklasse (PRIO1) der sendenden Station (UE1) ist.

3. Verfahren nach Anspruch 1 oder 2, bei dem
die deterministische Größe wenigstens ein zeitlich veränderlicher, für die sendende Station (UE1) und/oder die Funkverbindung (V) spezifischer Parameter (FP1) ist.

4. Verfahren nach Anspruch 3, bei dem
der wenigstens eine zeitlich veränderliche, für die sendende Station (UE1) spezifische Parameter (FP1) ein Zustand eines Datenspeichers der zu übertragenden Daten und/oder ein Ladezustand einer die sendende Station (UE1) versorgenden Energiequelle ist.

5. Verfahren nach Anspruch 3, bei dem
der wenigstens eine zeitlich veränderliche, für die Funkverbindung (V) spezifische Parameter (FP1) Übertragungseigenschaften eines für die Funkverbindung (V) verwendeten physikalischen Kanals betrifft.

6. Verfahren nach einem der vorstehenden Ansprüche, bei dem der Ablauf des ersten Zeitintervalls (t1) durch den Vergleich eines Werts eines Zählers (Z) mit einem Grenzwert (G1) bestimmt wird.

7. Verfahren nach einem der vorstehenden Ansprüche, bei dem die sendende Station (UE1) von der empfangenden Station (NodeB) einen Wert für eine Mindestzeitdauer Tmin1 für die Datenübertragung (D) empfängt.

8. Verfahren nach Anspruch 7, bei dem
die Mindestzeitdauer Tmin1 von der Prioritätsklasse (PRIO1) der sendenden Station (UE1) abhängt.

9. Verfahren nach einem der Ansprüche 1 bis 8,
bei dem die Datenübertragung (D) bei weiterhin bestehender Funkverbindung (V) erst nach dem Ablauf eines für die sendende Station (UE1) individuellen Sendezeitintervalls (t3) unterbrochen wird, dessen Dauer von der deterministischen Größe abhängt.

10. Verfahren nach Anspruch 1 bis 8, bei dem
nach einer Unterbrechung der Datenübertragung (D) die Funkverbindung (V) weiterhin besteht und eine Fortsetzung der Datenübertragung nach Ablauf eines für die sendende Station (UE1) individuellen zweiten Zeitintervalls (t4) beginnt, dessen Dauer von der deterministischen Größe abhängt.

11. Sendende Station
- mit Mitteln (SE1) zum Aufbau einer Funkverbindung zwischen der sendenden (UE1) und einer empfangenden Station (NodeB) in einem ersten Schritt,
- und mit Mitteln (P1) zur Datenübertragung (D) von der sendenden (UE1) an die empfangende Station (NodeB) in einem zweiten Schritt erst nach dem durch die sendende Station (UE1) selbst ermittelten Ablauf eines für die sendende Station (UE1) individuellen ersten Zeitintervalls (t1) dessen Dauer von wenigstens einer deterministischen Größe abhängt.

12. Empfangende Station (NodeB)
- mit Mitteln (SE2) zum Aufbau einer Funkverbindung (V) zwischen einer sendenden (UE1) und der empfangenden Station (NodeB),
- und mit Mitteln (SE2) zum Übertragen wenigstens einer deterministischen Größe (PRIO1, G1) an die sendende Station (UE1), wobei die Datenübertragung (D) von der sendenden Station (UE1) an die empfangende Station (NodeB) erst nach dem von der sendenden Station (UE1) ermittelten Ablauf eines für die sendende Station (UE1) individuellen ersten Zeitintervalls (t1) erfolgt, dessen Dauer von wenigstens einen deterministischen Größe abhängt.

## Claims

1. Method for data transmission (D) from a sending station (UE1) to a receiving station (NodeB) via a radio link (V), in which
- a first step involves the radio link (V) being set up between the sending station (UE1) and the receiving station (NodeB),
- and a second step involves the sending station (UE1) starting the data transmission (D) only after the sending station (UE1) has ascertained that a first time interval (t1), which is individual to the sending station (UE1) and the duration of which is dependent on at least one deterministic variable, has elapsed.

2. Method according to Claim 1, in which
the deterministic variable is a priority class (PRIO1) for the sending station (UE1).

3. Method according to Claim 1 or 2, in which
the deterministic variable is at least one time-variant parameter (FP1) which is specific to the sending station (UE1) and/or to the radio link (V).

4. Method according to Claim 3, in which
the at least one time-variant parameter (FP1) which is specific to the sending station (UE1) is a state of a data memory for the data to be transmitted and/or a charge state of a power source powering the sending station (UE1).

5. Method according to Claim 3, in which
the at least one time-variant parameter (FP1) which is specific to the radio link (V) relates to transmission properties of a physical channel which is used for the radio link (V).

6. Method according to one of the preceding claims, in which
the first time interval (t1) is determined as having elapsed by comparing a value of a counter (Z) with a limit value (G1).

7. Method according to one of the preceding claims, in which
the sending station (UE1) receives from the receiving station (NodeB) a value for a minimum time period Tmin1 for the data transmission (D).

8. Method according to Claim 7, in which
the minimum time period Tmin1 is dependent on the priority class (PRIO1) of the sending station (UE1).

9. Method according to one of Claims 1 to 8, in which
the data transmission (D) is interrupted while the radio link (V) continues to exist only after a sending time interval (t3), which is individual to the sending station (UE1) and the duration of which is dependent on the deterministic variable, has elapsed.

10. Method according to Claims 1 to 8, in which
following an interruption in the data transmission (D) the radio link (V) continues to exist and continuation of the data transmission begins after a second time interval (t4), which is individual to the sending station (UE1) and the duration of which is dependent on the deterministic variable, has elapsed.

11. Sending station
- having means (SE1) for setting up a radio link between the sending station (UE1) and a receiving station (NodeB) in a first step,
- and having means (P1) for data transmission (D) from the sending station (UE1) to the receiving station (NodeB) in a second step only after a first time interval (t1), which is individual to the sending station (UE1) and the duration of which is dependent on at least one deterministic variable, has elapsed, as ascertained by the sending station (UE1) itself.

12. Receiving station (NodeB)
- having means (SE2) for setting up a radio link (V) between a sending station (UE1) and the receiving station (NodeB),
- and having means (SE2) for transmitting at least one deterministic variable (PRIO1, G1) to the sending station (UE1), wherein the data transmission (D) from the sending station (UE1) to the receiving station (NodeB) takes place only after a first time interval (t1), which is individual to the sending station (UE1) and the duration of which is dependent on at least one deterministic variable, has elapsed, as ascertained by the sending station (UE1).

## Revendications

1. Procédé pour transmettre des données (D) d'une station d'émission (UE1) à une station de réception (NodeB) par une liaison radio (V), dans lequel
- est établie, dans une première étape, la liaison radio (V) entre la station d'émission (UE1) et la station de réception (NodeB) et,
- dans une deuxième étape, la station d'émission (UE1) ne débute la transmission de données (D) qu'après que la station d'émission (UE1) a déterminé l'expiration d'un premier intervalle de temps (t1) individuel pour la station d'émission (UE1) et dont la durée dépend d'au moins une grandeur déterministe.

2. Procédé selon la revendication 1, dans lequel
la grandeur déterministe est une classe de priorité (PRIO1) de la station d'émission (UE1).

3. Procédé selon la revendication 1 ou 2, dans lequel
la grandeur déterministe est au moins un paramètre (FP1) variable dans le temps et spécifique pour la station d'émission (UE1) et/ou la liaison radio (V).

4. Procédé selon la revendication 3, dans lequel
l'au moins un paramètre (FP1) variable dans le temps et spécifique pour la station d'émission (UE1) est un état d'une mémoire de données des données à transmettre et/ou un état de charge d'une source d'énergie qui alimente la station d'émission (UE1).

5. Procédé selon la revendication 3, dans lequel
l'au moins un paramètre (FP1) variable dans le temps et spécifique pour la liaison radio (V) concerne des caractéristiques de transmission d'un canal physique utilisé pour la liaison radio (V).

6. Procédé selon l'une des revendications précédentes, dans lequel
l'expiration du premier intervalle de temps (t1) est déterminée par comparaison d'une valeur d'un compteur (Z) avec une valeur limite (G1).

7. Procédé selon l'une des revendications précédentes, dans lequel
la station d'émission (UE1) reçoit de la station de réception (NodeB) une valeur pour une durée de temps minimale Tmin1 pour la transmission de données (D).

8. Procédé selon la revendication 7, dans lequel
la durée de temps minimale Tmin1 dépend de la classe de priorité (PRIO1) de la station d'émission (UE1).

9. Procédé selon l'une des revendications 1 à 8,
dans lequel la transmission de données (D) n'est interrompue qu'après l'expiration d'un intervalle de temps d'émission (t3) individuel pour la station d'émission (UE1) et dont la durée dépend de la grandeur déterministe, la liaison radio (V) étant maintenue.

10. Procédé selon la revendication 1 à 8, dans lequel,
après une interruption de la transmission de données (D), la liaison radio (V) est maintenue et une poursuite de la transmission de données commence après l'expiration d'un deuxième intervalle de temps (t4) individuel pour la station d'émission (UE1) et dont la durée dépend de la grandeur déterministe.

11. Station d'émission
- avec des moyens (SE1) pour établir une liaison radio entre la station d'émission (UE1) et une station de réception (NodeB) dans une première étape et
- avec des moyens (P1) pour transmettre des données (D) de la station d'émission (UE1) à la station de réception (NodeB) dans une deuxième étape seulement après l'expiration, déterminée par la station d'émission (UE1) elle-même, d'un premier intervalle de temps (t1) individuel pour la station d'émission (UE1) et dont la durée dépend d'au moins une grandeur déterministe.

12. Station de réception (NodeB)
- avec des moyens (SE2) pour établir une liaison radio (V) entre une station d'émission (UE1) et la station de réception (NodeB) et
- avec des moyens (SE2) pour transmettre au moins une grandeur déterministe (PRIO1, G1) à la station d'émission (UE1), la transmission de données (D) de la station d'émission (UE1) à la station de réception (NodeB) n'ayant lieu qu'après l'expiration, déterminée par la station d'émission (UE1), d'un premier intervalle de temps (t1) individuel pour la station d'émission (UE1) et dont la durée dépend d'au moins une grandeur déterministe.
